# EUROPEAN PATENT SPECIFICATION

(11) **EP 2 957 399 B1**
(45) Date of publication and mention of the grant of the patent: **10.08.2022**
(21) Application number: 15002271.3
(22) Date of filing: 18.06.2015
(51) Int. Cl.: B25J 15/00

(54) **EQUIPMENT FOR TAKING A BENT PIPE**
AUSRÜSTUNG ZUR AUFNAHME EINES GEBOGENEN ROHRES
ÉQUIPEMENT PERMETTANT DE PRENDRE UN TUYAU COUDÉ

(30) Priority: 20.06.2014 IT MI20141128
(43) Date of publication of application: 23.12.2015
(73) Proprietor: CRIPPA S.P.A., 22060 Arosio (CO) (IT)
(72) Inventor: Bargna, Claudio, 22060 Arosio (CO) (IT); Pace, Alessandro, 22060 Arosio (CO) (IT)
(74) Representative: Nemni, Raffaelo

(56) References cited:
- EP-A1- 1 174 374
- EP-A1- 2 433 723
- EP-A2- 1 145 805
- FR-A1- 2 747 599
- US-A1- 2009 249 750
- US-A1- 2012 006 651

## Description

### TECHNICAL FIELD

The equipment according to the present invention concerns a mechanical arm operated by at least one electronic device. The arm is equipped, at one of its ends, with a container suitable for the taking of a bent pipe at the end of the bending process, this way solving the drawbacks affecting the equipment known so far, among which the uncontrolled fall of the bent pipe or the complexity found in programming the mechanical arm handling electronic control device.

### STATE OF THE ART

Bent pipes are used in many industrial sectors. They are produced by using pipe bending machines capable of producing sections of pipe featuring pre-set lengths and shapes.

The pipe bending process comprises the shaping of sections of a common rectilinear pipe of a standard length to obtain at least one bent pipe manufactured piece featuring pre-set length and curvilinear shape, briefly referred to below as bent pipe or manufactured piece.

To obtain such a manufactured piece, the rectilinear pipe is shaped according to a pre-set manufacturing program and cut, so as to separate the manufactured piece from the common rectilinear pipe, which will be subsequently bent to obtain another manufactured piece and so on for the complete length of the rectilinear pipe.

The manufactured piece separated from the rectilinear pipe shall be picked up immediately after being expelled from the pipe bending machine to be collected according to a specific program.

Very often are the individual bent pipes, obtained at the end of the bending process, collected in trolleys to be transported to the various work positions and used to manufacture a variety of articles, for instance legs of chairs or different applications in the car industry. Said manufactured pieces are also stored to be subsequently sent to other plants for their use, already illustrated.

The techniques known so far adopt one of the three following methods to pick-up a manufactured piece expelled from the pipe bending machine at the end of the cutting step:
(i) by uncontrolled fall of the manufactured piece into a container, with its respective drawbacks related to the damages possibly occurring to the manufactured piece itself or to other manufactured pieces already present in said container;
(ii) manually by means of an operator, with its respective drawbacks related to the non-automation of this step of the production process;
(iii) by means of an industrial robot which grips the manufactured pieces by the pincers it is provided with. In the latter case, adopting an industrial robot to unload the bent pipe is an approach similar to that described in (ii) above, but solves the drawback related to the non-automation of that step of the production process.

However, programming the software that controls the industrial robot is a complex task and such complexity is a major drawback in our case. It is known that, in the usual industrial production that uses bent pipes, manufactured pieces featuring different bending radii and lengths are used. The bent pipe gripping operation shall be performed by an equipment capable of gripping manufactured pieces of different lengths and shapes.

Because of this latter circumstance, difficulties are born in the adoption of industrial robots as manufactured piece gripping equipment. Programming an industrial robot is not very simple and requires a number of programming, depending on the number of manufactured pieces to be gripped by the subject equipment However the industrial robot and in particular the robot arm is used in the industry for automatically arranging abject into a collector, as described in the document US 2009/0249750 A1.

That document describes a collector device including a collector connected to a positioned, such as a robot arm. By moving the collector in multiple dimension, the positioned provides for object to be arranged in the collector according to the specific pattern. Unfortunately that document describes a solution for collecting flat articles and articles having a specific pattern having regular shape. Therefore, this document does not suggest that device cam be used for irregular shape articles such as bent pipes.

The drawbacks illustrated above for the methods adopted by the known techniques to take a manufactured piece upon its expulsion from the pipe bending machine are solved by the equipment according to the present invention, which offers other advantages as described in the next paragraph.

### DISCLOSURE OF THE INVENTION

The equipment for taking the bent pipe according to claim 1 is the subject of the present invention, it comprises a mechanical arm operated by first means controlled by at least one first electronic device. The mechanical arm is provided with at least one container which is located at an end of the arm. The device according to the present invention is thus capable of advantageously the taking of a manufactured piece of any shape, length, and dimensions.

This feature solves the problems related to:
(a) free fall of the manufactured piece, as per item (i) in the previous paragraph. This result is achievable because the arm and the container can be positioned at the appropriate height to collect the bent pipe immediately after its expulsion from the pipe bending machine, thus substantially zeroing the pipe taking drawbacks according to this known technique;
(b) no-automation of the bend pipe gripping method as per item (ii) in the previous paragraph;
(c) difficulties in programming industrial robots, being it not necessary to make multiple programming as a function of the number of manufactured pieces to take. As a matter of fact, it is sufficient to program the device to position the arm and the container in the concerned area and at the appropriate height to collect the bent pipe immediately after its expulsion from the pipe bending machine, this way avoiding the multiple programming depending on the number of manufactured pieces to take.

The equipment according to the present invention features a programmability of the mechanical arm electronic control device with at least three degrees of freedom. This way, the mechanical arm is able to freely move in the space and consequently to displace the container from its idle position to the bent pipe taking one while occupying as small volumes as possible: think, for instance, to the travel of a box-shaped container from the idle zone to the pipe taking one in a vertical position, and the horizontal position which is taken again just upon reaching the bent pipe taking zone. Likewise the container can move from the one or several manufactured pieces taking zone to the unloading one in order to continue the production activity or to store it/them. In order to achieve the latter advantage related to the possibility of displacing a loaded container while occupying reduced volumes, the container is provided with third means (8) suitable for closing it.

The container is provided with at least one second device that is configured and arranged for facilitating the unloading of the bent pipe into the container from the pipe bending machine and wherein the second device as consisting of a inclined plane with a polyurethane surface which makes the bent pipe slowly slip into the container.

The container is also provided with second means suitable for unloading one or several manufactured pieces from the container to continue the production activity or to store them in the area reserved therefore according to the factory's layout.

The manufactured piece expelled from the pipe bending machine can be taken by letting the manufactured piece expelled from the machine fall into the container previously brought to the appropriate height, but preferably by taking the manufactured piece and placing it in the container through at least one second device used to facilitate its unload.

### DESCRIPTION OF THE DRAWINGS

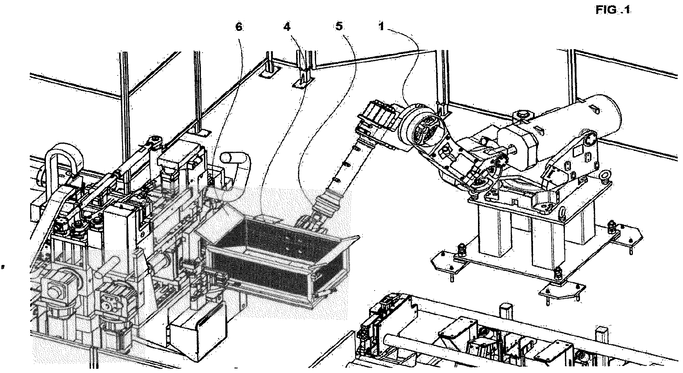

Figures 1 to 3 show a perspective view of an embodiment of the equipment according to the present invention. Said figures also show a pipe bending machine and other machineries, which are not numbered because they are not part of the present invention and are just shown in the figures to emphasize the advantageous features of the subject invention.

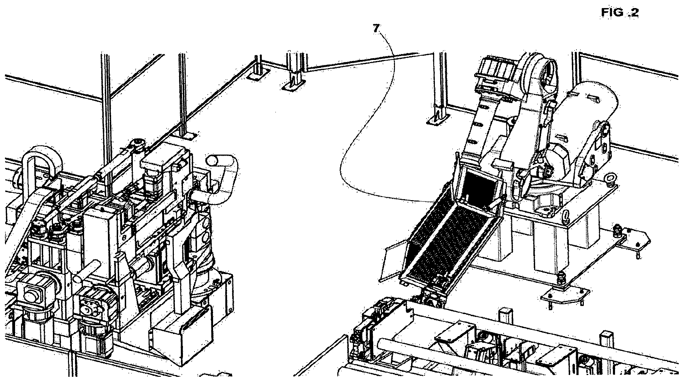

Figure 1 shows the mechanical arm of the equipment taking a bent pipe according to the present invention. The mechanical arm is operated by first means (2), not shown in the figure, which are controlled by at least one, preferably programmable first electronic device (3), not shown in the figure. The arm (1) is provided with at least one container (4) located at an end (5) thereof. The container (4) is in turn provided with a second device (6) facilitating the unload of the bent pipe into the container (4), thus making the taking of the bent pipe even easier. Figure 2 graphically shows the second device (6) as consisting of an inclined plane with a polyurethane surface which makes the bent pipe slowly slip into the container (4). This graphical representation is just an example of the second device (6), but it does not limit the scope of the claims in any way.

Figure 2 shows the mobility and programmability of the arm (1) with at least three degrees of freedom. Such a freedom makes it possible to move the container (4) and, for instance, to displace the container (4) from the idle position to the bent pipe taking one while occupying as little volumes as possible, as shown in figure 2, the container (4) being moved to a vertical position. To provide the arm (1) with the maximum displacement capabilities and the maximum degrees of freedom, the container (4) is provided with third means (8) suitable for closing the container (4).

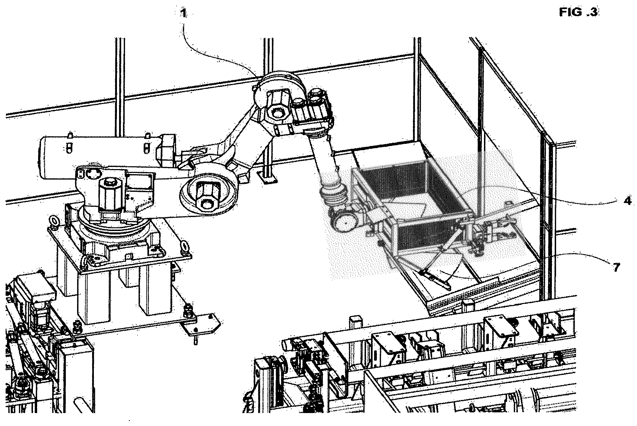

Figure 3 shows the arm (1), the container (4) being unloading one or several bent pipes thanks to second means (7) suitable for unloading the bent pipe, the container (4) being provided with said second means (7).

## Claims

1. Equipment for taking a bent pipe that has been expelled from a pipe bending machine, the equipment comprising a mechanical arm (1) operated by first means (2) controlled by at least one first electronic device (3) provided with at least one container (4) located at an end (5) of the arm (1) wherein the first device (3) is electronically programmable and the arm (1) is programmable with at least three degrees of freedom wherein the mechanical arm (1) is programmable with at least three degree of freedom for displacing the container (4) from the idle position to the bent pipe taking the one while occupying as little volumes as possible and the container (4) is provided with at least one second device (6) that is configured and arranged for facilitating the unloading of the bent pipe into the container (4) from the pipe bending machine and **characterised in that** the second device (6) consists of a inclined plane with a polyurethane surface which makes the bent pipe slowly slip into the container (4) and the container (4) is provided with second means (7) that has been configured and arranged to slide by an inclined plane the bent pipe for unloading the bent pipe from the container (4).

## Patentansprüche

1. Ausrüstung zur Entladung eines von einer Rohrbiegemaschine ausgeworfenen gebogenen Rohrs, wobei die Ausrüstung einen mechanischen Arm (1) aufweist, der durch eine erste Einrichtung (2) betrieben und durch mindestens ein erstes elektronisches Gerät (3) gesteuert wird. Der Arm (1) ist mit mindestens einem an seinem Ende (5) angeordneten Behälter (4) ausgestattet, wobei das erste Gerät (3) elektronisch programmierbar ist und der Arm (1) mit mindestens drei Freiheitsgraden programmierbar ist, um den Behälter (4) so platzsparend wie möglich von der Leerlaufposition in die Position zur Entladung des gebogenen Rohrs zu versetzen. Der Behälter (4) ist mit mindestens einer zweiten Vorrichtung (6) ausgestattet, die so konfiguriert und angeordnet ist, dass die Entladung des gebogenen Rohrs von der Rohrbiegemaschine in den Behälter (4) erleichtert wird und **dadurch gekennzeichnet, dass** die zweite Vorrichtung (6) aus einer schrägen Ebene mit einer Polyurethan-Oberfläche, die das gebogene Rohr langsam in den Behälter (4) gleiten lässt. Der Behälter (4) ist mit einer zweiten Einrichtung (7) ausgestattet, die so konfiguriert und angeordnet ist, dass das gebogene Rohr zur Entladung über eine schräge Ebene aus dem Behälter (4) gleiten kann.

## Revendications

1. Appareil ayant pour fonction de saisir le tuyau cintré expulsé par une cintreuse, l'appareil comprenant un bras mécanique (1) actionné par un premier système (2) contrôlé par au moins un premier dispositif électronique (3). Il est doté d'au moins un conteneur (4) situé à une extrémité (5) du bras (1), où le premier dispositif (3) peut être programmé électroniquement et le bras mécanique peut lui aussi être programmé, avec au moins trois degrés de liberté, afin de déplacer le conteneur (4) depuis la position de repos jusqu'à la position de prise du tuyau cintré tout en occupant le moins de place possible.
Le conteneur (4) est doté d'au moins un second dispositif (6) configuré et agencé de façon à faciliter le déchargement du tuyau cintré depuis la cintreuse jusque dans le conteneur (4) et **caractérisé en ce que** le second dispositif (6) consiste en un plan incliné avec une surface en polyuréthane qui permet ainsi au tuyau cintré de glisser lentement dans le conteneur (4) et le conteneur (4) est doté d'un second système (7) configuré et agencé pour faire glisser le tube cintré sur un plan incliné pour décharger le tube cintré du conteneur (4).
